Europäisches Patentamt

European Patent Office

Office européen des brevets

(11) Publication number: **0 353 044**
**A1**

(12) # EUROPEAN PATENT APPLICATION

(21) Application number: **89307592.9**

(22) Date of filing: **26.07.89**

(51) Int. Cl.⁵: **C 09 K 5/06**

(30) Priority: **26.07.88 GB 8817754**

(43) Date of publication of application:
**31.01.90 Bulletin 90/05**

(84) Designated Contracting States:
**AT BE CH DE ES FR GB GR IT LI LU NL SE**

(71) Applicant: **THERMO PRODUCTS LIMITED**
**37 Uddens Trading Estate**
**Stapehill Wimborne Dorset, BH2 7NL (GB)**

(72) Inventor: **Mayhew-Lewis, Lenn**
**18 Ruxley Ridge Claygate**
**Esher, Surrey KT10OHZ (GB)**

(74) Representative: **Alexander, Thomas Bruce et al**
**Boult, Wade & Tennant 27 Furnival Street**
**London EC4A 1PQ (GB)**

(54) **Activation of heat packs.**

(57) An activator for a heat pack comprising a substrate carrying abrasive particles. The activator initiates crystallisation of a supersaturated solution contained within the heat pack, the process of crystallisation being an exothermic process.

*FIG. 3.*

EP 0 353 044 A1

## Description

## ACTIVATION OF HEAT PACKS

This invention relates to heat packs and to an activation means for such packs.

Heat packs are an established article of commerce in the form of a container, usually flexible and in the form of a bag of synthetic polymer, completely sealing a mixture of an inorganic salt (for example sodium triacetate) and water, optionally with other thickening additives. The mixture is such that at room temperature there is insufficient water to dissolve the sodium triacetate but at more elevated temperatures the acetate completely dissolves.

It is a characteristic of many inorganic salts dissolved in water at a higher temperature that, as the water cools, the salts do not precipitate out but remain in a supersaturated solution. Sodium triacetate manifests this characteristic to a marked extent, so that it can be dissolved in hot water and the solution cooled to room temperature to form a quite stable supersaturated solution containing more than the equilibrium amount of sodium triacetate.

Such super saturated solutions can be induced to crystallise out, with a consequent rise in temperature. This characteristic is used as the basis of heat packs, which provide a readily available source of mild heat when a supersaturated solution of sodium triacetate therein is caused to solidify.

Solidification can be caused by extraneous influences such as seeding with a solid crystal of the triacetate, or possibly by ultra sonics or even excessive cooling. In practical terms, however, it is caused by imparting mechanical energy to the solution in an extreme and localised form, e.g by some form of snap-displacement trigger or activator.

Primarily, these triggers appear to operate by the mutual abrasion of metal surfaces for example, as adjacent turns of a coil spring, or by the flexure of a thin metal member containing various slits or orifices the edges of which pass to abrade one another or at least in close proximity with one another. One theory (although this theory plays no part in the present invention and should not be taken to limit any claims herein) is that the passage of the metal surfaces across one another, all of which surfaces are rough to a greater or less extent, causes micro cavitation as the roughnesses suddenly slip past their counterparts, so that crystallisation is initiated by such micro cavitation and then proceeds throughout the bulk of the liquid. Another theory is based on non-equilibrium thermodynamics at the molecular and/or atomic levels.

Known mechanical triggers for heat packs, all of which in practice rely upon some configuration to facilitate the rubbing or passage of two metal surfaces one past another, possess characteristic defects. Firstly, they are of relatively small size and whether localised or not, have to be located by the user before being pressed. This is not always convenient especially if the heat pack is used, for example, in low temperature survival clothing or is otherwise concealed under layers of fabric. Secondly, they tend to be either not sensitive enough so that several operations are needed to start up the heat pack, or too sensitive so that the heat pack goes off prematurely upon casual impact. It appears that there is a rather narrow spectrum of sensitivity which is of practical usefulness. Moreover, these known snap-displacement means (which are typically a dished disc of thin metal having two stable positions and being capable of rapid flexure by snap displacement between them) while not expensive per se form a significant component of the expense of turning out large volumes of cheap unit products.

Since their activator means are made of metal, the heat packs of the prior art cannot be heated using microwaves and hence conversion of the contents of the heat pack from the solid to super-saturated viscous form must be accomplished by slow methods such as boiling.

The present invention set out to provide a new form of activator means for heat packs which does not depend upon the rubbing together of configured slits or orificed metal surfaces.

The invention provides an activator for a heat pack comprising a substrate carrying immobilised abrasive particles and means to abrade the particles.

In one embodiment of the invention the substrate is deformable, so that deformation of the substrate causes the immobilised abrasive particles to mutually contact and rub upon each other, thereby initiating crystallisation of the supersaturated liquid, which is preferably sodium triacetate. The substrate is preferably resiliently deformable, so that it returns more or less to its original shape thereby permitting of repeated use of the heat pack after redissolving the sodium triacetate.

The substrate may carry particles only upon its surface, but more preferably upon the surface and/or within the thickness, in which latter case the substrate should be liquid permeable. Typically, the particles themselves are sharp edged and abrasive in nature although it falls within the scope of the invention to provide particles become abrasive through use by cracking or otherwise becoming sharp edged. It is possible that the passage past each other of the sharp edges of the particles causes microcavitation and thus leads to reliable and reproducible crystallisation; as indicated above, other possibilities also exist.

When the substrate is liquid permeable it can be in the form of a layer or block of resilient material. Preferably, the substrate could be formed of fibrous material. For example, it could be a block of foam elastomer with interconnecting cells having disseminated throughout its thickness a loading of immobilised sharp edged particles. More preferably however it is in the form of a layer of polymer fibres interpenetrating and possibly interconnecting with one another in the form of a woven, knitted, non-woven or otherwise felted or expanded layer, as a single sheet or built up into blocks to which the particles are fixed. The layer of polymer fibres shall be hereinafter called polymeric fibre webbing.

In one embodiment of the invention the particles are immobilised by suitable melt bonding with polymer fibres of elastomer material. In another preferable embodiment, an adhesive resin material is used so that the particles are immobilised in relation to the substrate.

It will be apparent therefore, that one form of activator which can be fabricated according to the present invention is a coherent layer of polymer fibres having attached throughout the layer particles of hard abrasive material. Such a product could be allowed to float free within the pack but lends itself readily to attachment to the polymer walls of the heat pack. Indeed, if a suitable polymer is chosen it may be possible to incorporate the polymer fibres as part of the heat pack welding them as a strip of such material to for example, either side of the pack so that a localised band is provided.

In a preferred embodiment of the invention are provided, in addition to the substrate, layers of substantially inflexible material. The inflexible material is preferably formed of plastics. The layers of substantially inflexible material are preferably positioned adjacent to and in contact with a layer of substrate, on opposing sides of the layer of substrate, to facilitate the application of pressure to the substrate. Another embodiment provides a plurality of layers of substrate and a plurality of layers of substantially inflexible material, such that layers of substrate alternate with layers of inflexible material, each layer of substrate being in contact with at least two layers of inflexible material.

Advantages are apparent from the use of a basically polymeric material carrying abrasive particles, typically of metal oxides. For example, provided that low powers are used the heat pack can be remelted after use in a microwave or induction heater, since there are no metal parts. Care should be taken however, not to heat in too rapid a fashion since vapour bubbles can be caused to arise in the essentially viscous solution.

Typical particles which may be used in the course if the invention are the oxides or the carbides of metals. For example, the aluminium oxides known as corundum or gamma-alumina may be used. Corundum is an aluminium oxide crystallising in the trigonal system and almost as hard as diamond, and alumina is a more generalised term for aluminium oxides. Moreover, carbides of metals in groups IV-VI of the periodic table more especially silicon, iron, tungsten are well known per se as exceptionally hard and abrasive particle material.

It has been found that such materials occupy a useful band of sensitivity being neither too sensitive to impact shock nor insensitive to intentional activation. They are also cheap, lend themselves well to incorporation in the polymeric structure of a heat pack and can be fabricated in many different shapes and sizes having regard to the end use.

It falls within the scope of the invention as indicated above, to provide the activator as two separated portions. In one embodiment of the invention there are provided a plurality of layers of the substrate and means to abrade said layers. For example, instead of a single flexible material such that on compression the internal particles rub together to cause crystallisation or instead of using a folded material so that the particles in the adjacent surfaces rub together (as well as or alternatively to, any contained internal particles), it is possible to use a thin layer upon each opposed inner face of a polymer bag containing the super saturated solution. The bag itself can thus be an integral part of the activator means. Indeed, it falls within the scope of the invention to use for the bag a polymer having extending from its surface sharp particles such that the inner surface of the bag, while not of itself an initiator of crystallisation is caused to become so upon intentional rubbing together of the two walls.

Preferred embodiments of the present invention will now be described, by way of example, with reference to the accompanying drawings in which:

Fig. 1 shows a body of the substrate with the abrasive particles disposed therein.

Fig. 2 shows a body of polymeric fibre webbing.

Fig. 3 shows an embodiment of an activating mechanism comprising the substrate.

Fig. 4 shows a heat pack with embodiment of the activator shown in Fig. 3 disposed therein.

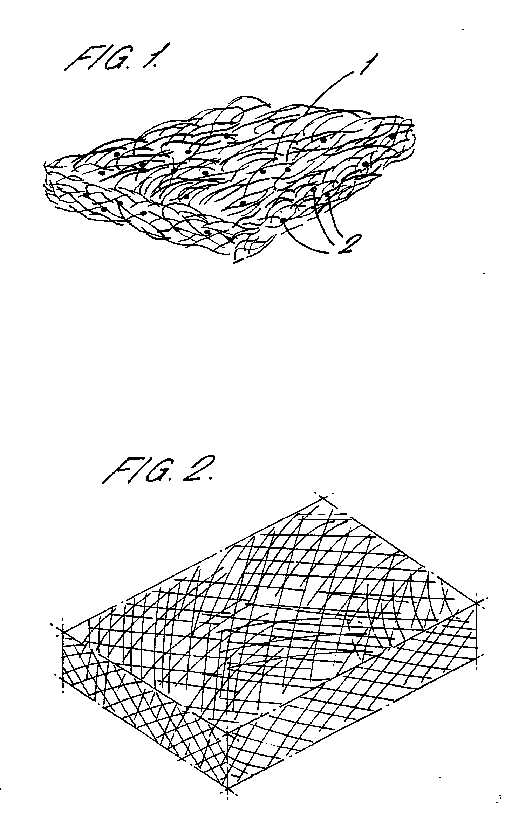

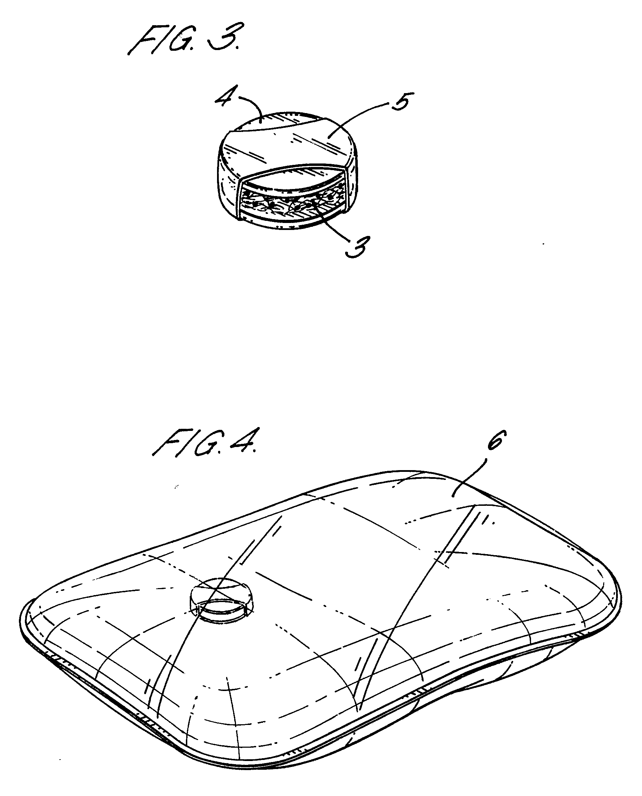

Referring to the drawings, a substrate shown in Fig. 1 has a body of polymeric fibre webbing (1) with abrasive particles disposed therein (2). There is shown in greater detail in Fig. 2 a body of polymeric fibre webbing.

A preferred embodiment of an activator incorporating the substrate is shown in Fig. 3. The webbing forms a cylinder (3), being typically 5mm in thickness and 20mm in diameter. Two nylon discs (4), are disposed adjacent to the web at opposite ends of the cylinder formed by the web. The discs are partially surrounded by a cover of synthetic material (5), to secure them in relation to the web. The synthetic material used for the cover is preferably a shrink-fit polyethelene. Alternatively, the discs may be affixed to the web, for example by the use of a resin. The substrate carried particles of silicon carbide.

The preferred range of size of the particles contained in the webbing is from 18 microns to 45 microns, although a much wider range may be used. The particles (2) are preferably of alumina in the form of corundum or carbides of silicon, iron or tungsten.

The polymeric fibre webbing (1) is preferably formed of nylon or a polyolefin such as propylene. The particles (2) are preferably adhered to the polymeric fibre webbing by an epoxy or polyester adhesive.

The activator is, in use, disposed within a heat pack (6), either freely disposed therein or attached to the walls thereof. A preferred embodiment of a heat pack is shown in Fig. 4, comprising a rectangular polyolefin bag containing sodium triacetate and an activator as described before. When pressure is applied to opposite faces of the polymeric fibre webbing, elastic deformation of the webbing occurs. The particles contained in the webbing contact each other and pass one another when the webbing deforms. Such contact will occur in many hundreds of places throughout the web, with a proportion of the contacts causing abrasion sufficient to initiate the crystallisation of the liquid contained in the heat pack. The abrasion causes the crystallisation either by microcavitation (according to one theory) or suitable thermodynamic changes (according to another theory).

It will be apparent to the man skilled in the art that the activator can be fabricated in many different shapes and sizes and be incorporated into the structure of any bag at a desired location or indeed, as part of the structure itself.

## Claims

1. An activator for a heat pack, comprising a substrate carrying immobilised abrasive particles and means to abrade the particles.

2. An activator as claimed in Claim 1 wherein the substrate is deformable to abrade the particles.

3. An activator as claimed in Claim 2 wherein the substrate is resiliently deformable.

4. An activator as claimed in either one of Claims 2 or 3 wherein the substrate is a body of fibrous material.

5. An activator as claimed in any one of the preceding claims comprising first and second substrates, the particle being abraded by contact between the substrates.

6. An activator as claimed in any one of the preceding claims, further comprising at least one layer of substantially inflexible material.

7. An activator as claimed in Claim 6 wherein a layer of substantially inflexible material is located adjacent to a layer of substrate on each side of the substrate.

8. An activator as claimed in Claim 7 wherein the activator is partially surrounded by a polymer material.

9. An activator as claimed in any one of the preceding claims wherein the substrate is a webb of polymeric material.

10. An activator as claimed in Claim 8, wherein the polymeric material is nylon or a polyolefin.

11. An activator as claimed in any one of the preceding claims, wherein the abrasive particles are oxides or carbides of metal.

12. An activator as claimed in Claim 11 wherein the oxide of metal is an oxide of aluminium.

13. An activator as claimed in any one of the preceding claims wherein the abrasive particles are carbides of elements in groups IV, V and VI of the periodic table.

14. An activator as claimed in Claim 13 wherein the carbides are carbides of silicon, iron or tungsten.

15. An activator as claimed in any one of the preceding claims wherein the abrasive particles are affixed to the substrate by heat bonding.

16. An activator as claimed in any one of the preceding claims wherein the abrasive particles are adhered to the substrate by a polymer resin.

17. A heat pack comprising a container of supersaturated liquid and an activator as claimed in any one of the preceding claims located within the container.

18. A heat pack as claimed in Claim 17 wherein the activator is freely disposed within the container.

19. A heat pack as claimed in Claim 17 wherein the activator is attached to the walls of the container.

20. A heat pack as claimed in Claim 17 wherein the activator is integral with the walls of the container.

21. A heat pack as claimed in any one of the Claims 17, 18, 19 or 20, wherein the supersaturated liquid is sodium triacetate.

*FIG. 1.*

*FIG. 2.*

FIG. 3.

FIG. 4.

European Patent
Office

**EUROPEAN SEARCH REPORT**

Application Number

EP 89 30 7592

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-C- 508 922 (CRONENBERG)<br>* Claim 1; page 1, lines 14-15,27-31 *<br>--- | 1-7,15,<br>19-21 | C 09 K 5/06 |
| Y | EP-A-0 045 971 (KAPRALIS)<br>* Claims 1,6,10; page 3, lines 21-25 *<br>--- | 1-7,15,<br>19-21 | |
| A | DE-A-2 639 176 (UNIVERSITY OF DELAWARE)<br>* Claims 1,5,7,12 *<br>--- | 1,3,6,<br>19-21 | |
| A | US-A-4 587 950 (MACK)<br>* Claims 1,2 *<br>--- | 1-19 | |
| A | US-A-4 379 448 (KAPRALIS)<br>----- | | |
| | | | TECHNICAL FIELDS SEARCHED (Int. Cl.5) |
| | | | C 09 K<br>B 01 D<br>F 24 J<br>A 61 F |

The present search report has been drawn up for all claims

| Place of search | Date of completion of the search | Examiner |
|---|---|---|
| THE HAGUE | 17-10-1989 | NICOLAS H.J.F. |

EPO FORM 1503 03.82 (P0401)